# EUROPEAN PATENT SPECIFICATION

(11) **EP 1 639 548 B1**
(45) Date of publication and mention of the grant of the patent: **08.10.2008**
(21) Application number: 04736941.8
(22) Date of filing: 16.06.2004
(51) Int. Cl.: G06T 11/00

(54) **DEVICE TO GENERATE A THREE-DIMENSIONAL IMAGE OF A MOVED OBJECT**
VORRICHTUNG ZUR ERZEUGUNG EINES VOLUMENBILDES VON EINEM BEWEGTEN OBJEKT
DISPOSITIF PERMETTANT DE GENERER UNE IMAGE TRIDIMENSIONNELLE D'UN OBJET DEPLACE

(30) Priority: 24.06.2003 EP 03101852
(43) Date of publication of application: 29.03.2006
(73) Proprietor: Philips Intellectual Property & Standards GmbH, 20099 Hamburg (DE); Koninklijke Philips Electronics N.V., 5621 BA Eindhoven (NL)
(72) Inventor: MOVASSAGHI, Babak c/o Philips Int.Prop.& StandardsGmbH, 52066 Aachen (DE); RASCHE, Volker c/o Philips Int.Prop.& StandardsGmbH, 52066 Aachen (DE)
(74) Representative: Volmer, Georg
(86) International application number: PCT/IB2004/050923
(87) International publication number: WO 2004/114221

(56) References cited:
- US-A- 5 564 412
- IZUMI M ET AL: "Back projection voting considering the error of camera orientation" EMERGING TECHNOLOGIES AND FACTORY AUTOMATION, 1996. EFTA '96. PROCEEDINGS., 1996 IEEE CONFERENCE ON KAUAI, HI, USA 18-21 NOV. 1996, NEW YORK, NY, USA,IEEE, US, 18 November 1996 (1996-11-18), pages 712-716, XP010204189 ISBN: 0-7803-3685-2

## Description

The invention relates to a method and a device for generating a three dimensional image of an object e. g. the heart, which is subject to cyclic movement.

U.S. Patent No. 5,564,412 discloses that in a medical resonance imaging method (NMR-tomography) the program steps are executed in order to localize the position of a finite number e of discrete individual objects in a selected slice within a measuring object after recording of two slice selective projections in different directions: determining the position of the e individual objects based on the previously carried out recording steps; inquiring whether the localization of the e individual objects is unique; if yes, then ending the program execution; if no, then inquiring whether the number n of non-unique possibilities is smaller than a predetermined threshold value s; if yes, then carrying out a further program step with an encoding parameter which is changed with respect to all previously executed steps in accordance with a fixed predetermined scheme and subsequently returning to the first program step; if no, then calculating an encoding parameter which is suitable for resolving at least the majority of non-unique possibilities for the subsequent recording step, carrying out this recording step, and ending program execution.

US 2002/0126794 A1 discloses a rotation X-ray device with which three-dimensional images of a patient's heart can be reconstructed. One problem with such reconstructions is that the object to be shown is not static but because of the heart beat is subject to a cyclic movement. Another important source for the movement of organs in medical examinations is the respiration of a patient. The 2D projections of the heart taken with a rotation X-ray device from various directions show the heart in different movement states. If these projection images are used to reconstruct a 3D image of the heart on the assumption that they reflect a static object, reconstruction errors necessarily occur. To minimize such errors US 2002/0126794 A1 proposes recording the electrocardiogram (ECG) in parallel to the X-rays and then using for reconstruction of the three-dimensional image only those X-ray pictures which correspond to approximately the same ECG phase. With such a method oriented to the ECG phase a substantial improvement in the 3D reconstruction can be achieved. Nonetheless it appears that furthermore certain inaccuracies and artifacts can occur in the reconstructed image.

In this context one object of the invention is to provide means for generating three-dimensional images of a cyclically moved object such as in particular the heart, which give improved image quality.

This object is achieved by a device with the features of claim 1 and by a method with the features of claim 8. Advantageous embodiments are contained in the subclaims.

The device according to the invention serves to generate a three-dimensional image of an object which is subject to a cyclic movement. The object can in particular be a patient's heart, where the invention is not however restricted to medical applications. The device contains an imaging device with which two-dimensional projection images of said object can be generated from different projection directions. The device furthermore contains a data processing device coupled with said imaging device which is designed, for example by fitting with corresponding software, to reconstruct from the projection images a three-dimensional image of the object. Processes and algorithms suitable for this task are for example known from the field of computer tomography. The data processing device is furthermore designed to select and use for said reconstruction of the three-dimensional image only those projection pictures for which the projection lines of a characteristic object feature intersect approximately at the same spatial point. A "characteristic object feature" is a feature which is attached to the object and follows its movements, identifies a body point and which can be shown as well as possible on the projection pictures. The object feature can for example be a marker on the object which stands out well on the projection pictures. "Markers" in this respect can e.g. also be a catheter or a stent (vessel connector). Similarly the object feature can be part of the object, for example a branch point of an object structure. In the context of medical applications in particular the branch point of a vessel can serve as an object feature. Furthermore the "projection line" of an object feature is the (imaginary) spatial line which for a given projection picture leads from the projection center through the object feature to the image point of the object feature on the projection plane or projection picture. In an X-ray image the projection line e.g. corresponds to the path of the X-ray beam from the beam source through the object feature to the associated pixel on the detector. Furthermore for the "approximate intersection" of projection lines (which evidently must include a precise intersection), depending on the peripheral conditions concerned, a suitable decision limit must be established in individual cases. For example all such projection lines can be regarded as intersecting approximately at the same spatial point if they draw closer together than 1% to 5% of the maximum width of the projection picture. Similar standards can evidently also be defined using other reference values such as for example the object size.

Using the device described it is possible to create three-dimensional images of a moved object in high quality, as for reconstruction of the 3D image only those two-dimensional projection pictures are used which already match well at the point of (at least) one characteristic object feature. It is therefore to be assumed that these projection pictures also correspond in the other object points or that for the selected projection pictures the object was in the same phase of cyclic movement and therefore had assumed approximately the same spatial position. When the device is used to show the heart, in contrast to the known processes based on the electrocardiogram, the advantage appears that the movement state of the heart is used directly as a selection criterion. The selection of projection pictures from the same ECG phase however is based implicitly on the assumption that the movement phase of the heart cycle is also clearly linked to the electrical phase. This assumption is however not always fulfilled precisely so that with the known ECG-based processes, reconstruction errors can occur. These errors are in principle excluded with the device proposed here.

Said condition for the selection of projection pictures for reconstruction of a three-dimensional image can evidently also be imposed similarly for more than one object feature. The selection method can thus e.g. be performed iteratively with one object feature after the other where the selection of projection pictures produced on each iteration is used as the basis for the next iteration, so the selection becomes ever narrower. In this case the precision increases as the position of the object in the selected projection pictures already matches at a corresponding number of points.

For the imaging part of the device in principle any device can be used with which projection pictures of an object can be generated from different directions, from which pictures a three-dimensional image can be reconstructed. Examples of these are an ultrasound device or an NMR device. In particular the imaging device can also be an X-ray device with an X-ray source and an X-ray detector which are rotatably mounted about a common axis. X-ray machines of this type are known from 3D rotation angiography (3D-RA) and the X-ray source and detector are typically attached to a C-arm.

Furthermore the device preferably comprises a display device coupled with a data processing system such as for example a monitor on which the reconstructed three-dimensional image can be shown. Such a display device allows for example a doctor to display visually the results of the three-dimensional reconstruction and analyze this directly for his diagnostic or therapeutic activities.

According to a preferred embodiment of the device the data processing machine is set up to perform the following steps:
a) selection of a first projection picture from a number of several projection pictures from different projection directions. This selection of the first projection picture can be arbitrary (e.g. on a random principle), interactive by a user or from other application-specific criteria (e.g. the imaging quality or associated ECG phase).
b) for the first said projection picture, a second projection picture taken from another projection direction is selected such that the projection lines of a characteristic object feature for the first and second projection picture intersect at least approximately at a spatial point. The characteristic object feature can in particular be located by a method of automatic image processing or interactively by a user and should be such that it can be detected in as many projection pictures as possible. After locating the characteristic object feature on a particular projection picture, the spatial projection line is calculated from the projection center to the image point of the object feature so that it can be checked whether it intersects approximately the corresponding projection line of the first projection picture. If this is the case the projection picture concerned is selected as the "second projection picture". The intersection point of the projection lines thus establish the spatial point which corresponds to the (presumed) actual position of the object feature and which is used for the subsequent selection of further projection pictures.
c) further projection pictures for reconstruction of the three-dimensional image are selected such that the associated projection lines of the object feature used in step b) run approximately through the spatial point determined in step b). In total thus successively a sub-quantity of projection pictures is selected from the given number of projection pictures which match each other in relation to the spatial position of the characteristic object feature concerned.

With the embodiment of the invention described above, the projection direction of the second projection picture preferably lies at an angle of around 90° to the projection direction of the first projection picture. In particular it can lie in an angular range between 70° and 110° to the first projection direction. In this way the spatial point which is later used for the selection of all projection pictures used for reconstruction can be established with maximum precision. Based on the first projection picture, of this spatial point namely only two of its three degrees of freedom are established as its position along the projection line of the first projection picture cannot be determined. The third degree of freedom is determined by the intersection of the projection lines of the second projection picture with the projection line of the first projection picture. In the case of a second projection picture essentially perpendicular to the first projection picture, any error in determining the position of the object feature in the projection is carried forward to a minimum in the determination of the spatial point.

The invention further relates to a method for producing a three-dimensional image of an object which is subject to a cyclic movement. The method comprises the following steps:
a) generation of a number of projection pictures of the object from various spatial directions;
b) selection of projection pictures for which the projection lines of a characteristic object feature intersect approximately at the same spatial point;
c) reconstruction of the three-dimensional image from the projection pictures selected in step b).

The method in general comprises the steps which can be executed with a device of the type defined above. For the further explanation of the method and its advantages therefore reference is made to the above description of the device. In particular the method can be refined according to the features of the variants of the device and for example comprise the steps which can be executed with the data processing device as claimed in claim 6.

In an optional embodiment of the method the projection pictures are generated by X-ray projection of the object, where the respective projection centers from which the X-ray beam is emitted are distributed approximately on a circle arc about the object. Typically the circle arc extends over a range of about 180° in order to cover all independent projection directions.

Furthermore the three-dimensional image reconstructed according to the method is preferably shown on a display device to be able to be analyzed visually by the user.

The invention will be further described with reference to examples of embodiments shown in the drawings to which however the invention is not restricted. These show:
Fig. 1 diagrammatically the structure of a device according to the invention to generate a three-dimensional image of the heart,
Fig. 2 a principle view of the conditions in the selection according to the invention of two-dimensional projection pictures of the same movement state of the heart,
Fig. 3 the size of the euclidean interval Δₙ between the projection of a spatial point r₀ which corresponds to the spatial position of the object feature in a particular heart phase, and the position of the image point of this object feature on a viewed projection picture with index n.

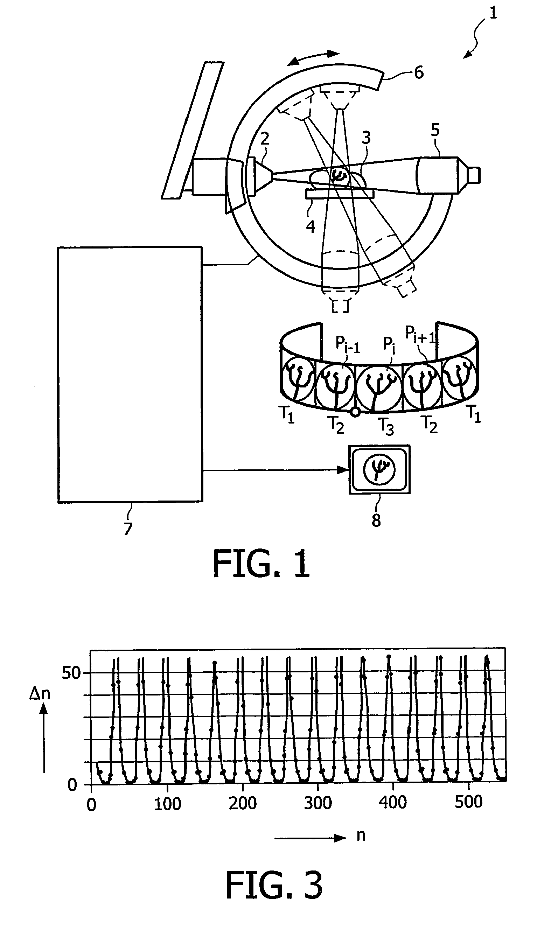

The invention will be explained below without restriction of generality using the example of a medical application, namely the three-dimensional imaging of the heart or the coronary vessels of a patient. The device used for this according to Fig. 1 as an example device comprises a rotation X-ray apparatus 1 with an X-ray source 2 and an X-ray detector 5. The X-ray source 2 and the X-ray detector 5 are arranged opposite each other on a C-arm 6 and can be swiveled about the patient 3 lying on a couch 4 (two swiveled positions as shown in dotted lines in the figure). The X-ray projection pictures Pᵢ₋₁, Pᵢ, Pᵢ₊₁, .... of the heart generated from various projection directions are transmitted to a data processing device 7 (e.g. a work station) used for control and image processing. The data processing device 7 comprises in particular software with image processing algorithms with which from the two-dimensional projection pictures Pᵢ₋₁, Pᵢ, Pᵢ₊₁,...., the three-dimensional form of the object or its structures for example coronary vessels, can be reconstructed. The corresponding algorithms are known from computer tomography and therefore need not be explained in more detail here. The result of the three-dimensional reconstruction can be shown on a monitor 8 coupled to a data processing device 7 in order to give the treating doctor an overview image of the vascular tree.

In said reconstruction for a three-dimensional image of the coronary vessels, it must be noted that because of the heart beat, the heart is subject to a cyclic movement. The projection pictures Pᵢ₋₁, Pᵢ, Pᵢ₊₁,.... produced therefore stem from different phases T₁, T₂, T₃ of the cardiac cycle during which the heart assumes different spatial positions. For the reconstruction only those two-dimensional projection pictures (e.g. Pᵢ₋₁, Pᵢ₊₁) should be used which correspond to the same cardiac movement phase (e.g. T₂ which can be the end of a diastole). In known methods the corresponding selection of projection pictures takes place on the basis of a parallel recorded electrocardiogram. The ECG however primarily represents the electrical state of the cardiac cycle, which does not always correlate to the movement state. In known methods the reconstructed 3D image thus often has a residual inaccuracy.

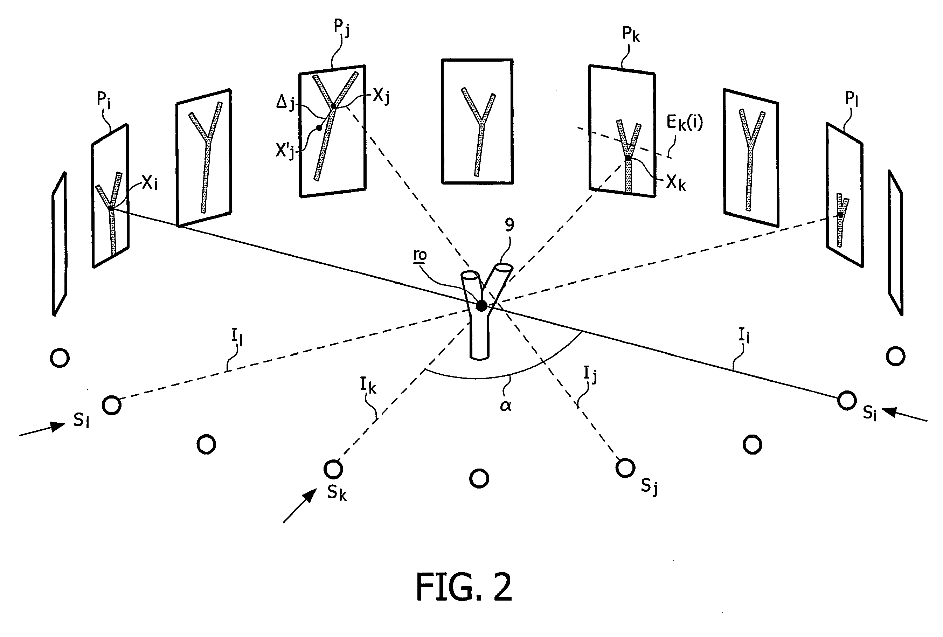

To avoid the outlined problems, primarily the method explained in more detail below with reference to Fig. 2 is proposed for the selection of projection pictures for the reconstruction of a 3D image. Fig. 2 shows in a perspective principle view the geometric conditions in the taking of projection pictures Pᵢ, Pⱼ, Pₖ, Pₗ,.... Each of the projection pictures arises as a central projection of an object starting from a projection center Sᵢ, Sⱼ, Sₖ, Sₗ,.... The project centers correspond to the position of the X-ray source 2 during the projection picture concerned and are distributed on a curve (e.g. circle arc) which in the optimum case covers an angle of more than 210°. The radiographed object 9 is shown in the center for the time of projection picture Pᵢ where it must be pointed out that during the other projection pictures it usually has a different form and position. The vascular branch contained in the object 9 constitutes a suitable object feature as it marks a point on the object 9 which in (almost) all projection pictures can be located relatively well. Instead of a vascular branch a marker can be used as an object feature such as for example a position marker impervious to X-rays on a catheter.

At production of the projection picture Pᵢ the object feature which is the branch of object 9 lies at a spatial point r₀ which is initially unknown. This spatial point r₀ is shown starting from the projection center Sᵢ via the projection line lᵢ in the image point Xᵢ of the object feature on the projection picture Pᵢ. The position of the image point Xᵢ in the projection picture Pᵢ can be located interactively or automatically using known methods of image processing. Similarly the position of the image point of the object feature on the other projection pictures can be determined (e.g. the image points Xⱼ, Xₖ in projection pictures Pⱼ or Pₖ) which were taken from other projection directions and usually belong to other phases of the cardiac cycle.

From the projection pictures a first projection picture Pᵢ is now selected at random by interaction of a user or otherwise. Starting from this all further projection pictures are determined which were taken in a similar movement phase of the heart as the first projection picture Pᵢ. To this end first a second projection picture is selected. According to a first criterion its projection direction should lie approximately at an angle α of 90° to the projection direction of the first projection picture Pᵢ. In the view in Fig. 2 thus the projection pictures about Pₖ are primarily concerned. For these projection pictures Pₖ,.... then according to a second criterion it is examined whether the associated projection lines lₖ,.... intersect the projection line lᵢ of the first projection picture Pᵢ or come closer to this than the prespecified maximum distance. In Fig. 2 this is the case for projection line lₖ which connects the projection center Sₖ with the image point Xₖ of the object feature on the projection picture Pₖ. The projection picture Pₖ thus determined is then established as the "second projection picture" and the (approximate) intersection of projection lines lᵢ and lₖ defines, for the further process, the spatial point r₀ at which the object feature (vessel branch) was presumably located during the basic cardiac movement phase.

The selection explained above of the second projection picture Pₖ can be performed in an equivalent manner using epipolar lines. For the projection picture Pₖ the epipolar line Eₖ(i) is drawn in dotted lines. It corresponds to the theoretical projection of the projection line lᵢ taken from the projection center Sₖ and therefore describes all theoretically possible locations of the object feature from knowledge of only the first projection picture Pᵢ. The latter mainly establishes the spatial position of the object feature only to one degree of freedom, as it cannot be decided from the projection picture Pᵢ where on the projection line lᵢ the object feature lies. Using the epipolar lines now for every other projection picture the euclidean interval can be calculated of the image point Xₖ,.... located on the respective projection picture Pₖ,.... of the object feature from the corresponding epipolar line Eₖ(i). The second projection picture Pₖ to be selected is distinguished in that its object feature image point Xₖ has the smallest distance from the associated epipolar line Eₖ(i).

Using the first and the second projection pictures Pᵢ and Pₖ as stated, the spatial point r₀ of the position of the object feature during the cardiac phase concerned can be determined. Thus this spatial point r₀ can be projected theoretically onto any other projection pictures. For example for projection picture Pⱼ point X'ⱼ is calculated at which the spatial point r₀ is projected from projection center Sⱼ. The euclidean distance Δⱼ between this projection point X'ⱼ and the image point Xⱼ of the object feature in the projection picture Pⱼ constitutes a measure of how greatly the cardiac movement phase in which projection picture Pⱼ is taken deviates from the cardiac movement phase during the first and second projection pictures Pᵢ, Pₖ. For the desired reconstruction of a three-dimensional image thus in a targeted manner those projection pictures P₁ can be selected for which said distance is nil or lies below a prespecified threshold.

With said method thus from the series of projection pictures Pᵢ, Pⱼ, Pₖ, Pᵢ, .... those can be selected which belong to the same cardiac movement phase, wherein advantageously true movement data and not derived electrical activities are used to determine the cardiac cycle. It is furthermore advantageous that the object feature used can be selected from a particularly interesting region of the object 9 and this region as priority is represented with high precision in the three-dimensional image.

Fig. 3 shows, for the projection pictures arranged according to the projection direction and numbered with index n (horizontal axis), the respective size of the euclidean distance Δₙ defined above between the calculated projection of the spatial point r₀ and the respective image position of the object feature. The cyclic variation corresponding to the cardiac rhythm is clear. For reconstruction of the three-dimensional image according to the above method, only the projection pictures from the "valleys" of the curve are used.

## Claims

1. A device for generating a three-dimensional image of an object (9) which is subject to a cyclic movement, comprising an imaging device (1) to generate projection pictures (Pᵢ₋₁, Pᵢ, Pᵢ₊₁, Pⱼ, Pₖ, Pₗ) of the object from various projection directions and a data processing device (7) coupled to this for reconstruction of a three-dimensional image of the object from said projection pictures, wherein the data processing device (7) is designed
- to identify a characteristic object feature point (Xᵢ,Xⱼ,Xₖ) in the projection pictures (P_{¡},Pⱼ,Pₖ,Pₗ);
- to construct projection lines (Iᵢ,Iⱼ,Iₖ) through the feature points towards the corresponding projection direction;
- to select for reconstruction only those projection pictures for which the projection lines (I_{¡},Iⱼ,Iₖ) intersect approximately in the same spatial point (r₀).

2. A device as claimed in claim 1, **characterized in that** the imaging device is an X-ray device (1) with an X-ray source (2) and an X-ray detector (5) which are mounted rotatable about a common axis.

3. A device as claimed in claim 1, **characterized in that** it comprises a display device (8) coupled with the data processing device (7) to display the reconstructed three-dimensional image.

4. A device as claimed in claim 1, **characterized in that** the characteristic object feature is a marker on the object, in particular a catheter or stent.

5. A device as claimed in claim 1, **characterized in that** the characteristic object feature is a branch point (r₀) of an object structure in particular a vessel.

6. A device as claimed in claim 1 where the data processing device (7) is designed
a) to select from a number of a projection pictures (Pᵢ, Pⱼ, Pₖ, Pₗ) a first projection picture (Pᵢ);
b) for said first projection picture (Pᵢ) to select a second projection picture (Pₖ) taken from another projection direction such that the projection lines (lᵢ, lₖ) of a characteristic object feature for both projection pictures (Pᵢ, Pₖ) intersect at least approximately at a spatial point (r₀);
c) to select further projection pictures (P₁) for the reconstruction of the three-dimensional image such that the associated projection lines (lᵢ) of the characteristic object feature run approximately through said spatial point (r₀).

7. A device as claimed in claim 6, **characterized in that** the projection direction of the second projection picture (Pₖ) lies approximately at an angle (α) of 90° to the projection direction of the first projection picture (Pᵢ).

8. A method for generating a three-dimensional image of an object (9) which is subject to a cyclic movement, comprising the steps of:
a) generation of a number of projection pictures (Pᵢ₋₁, Pᵢ, Pᵢ₊₁, Pⱼ, Pₖ, Pₗ) of the object (9) from various spatial directions;
b)
i) identification of a characteristic object feature point (Xᵢ,Xⱼ,Xₖ) in the projection pictures (P_{¡},Pⱼ,Pₖ,Pₗ);
ii) construction of projection lines (Iᵢ,Iⱼ,Iₖ) through the feature points towards the corresponding projection direction;
iii) selection of projection pictures for which the projection lines (I_{¡},Iⱼ,Iₖ) intersect approximately in the same spatial point (r₀);
c) reconstruction of the three-dimensional image from the projection pictures selected in step b).

9. A method as claimed in claim 8, **characterized in that** the projection pictures (Pᵢ₋₁, Pᵢ, Pᵢ₊₁, Pⱼ, Pₖ, Pₗ) are generated by X-ray projection of an object (9), wherein the projection centers (Sᵢ, Sⱼ, Sₖ, Sₗ) are distributed on a circle arc about the object.

10. A method as claimed in claim 8, **characterized in that** the reconstructed three-dimensional image is shown on a display device (8).

## Patentansprüche

1. Einrichtung zur Erzeugung eines dreidimensionalen Bildes eines Objektes (9), welches einer zyklischen Bewegung unterliegt, umfassend eine bildgebende Vorrichtung (1) zur Erzeugung von Projektionsaufnahmen (Pᵢ-₁, Pᵢ, Pᵢ₊₁, Pⱼ, Pₖ, Pₗ) des Objektes aus verschiedenen Projektionsrichtungen sowie eine hiermit gekoppelte Datenverarbeitungseinrichtung (7) zur Rekonstruktion eines dreidimensionalen Bildes des Objektes aus den genannten Projektionsaufnahmen, wobei die Datenverarbeitungseinrichtung (7) dazu eingerichtet ist,
- einen charakteristischen Objektmerkmalpunkt (Xᵢ, Xⱼ, Xₖ) in den Projektionsaufnahmen (Pᵢ, Pⱼ, Pₖ, Pₗ) zu identifizieren;
- Projektionslinien (lᵢ, lⱼ, lₖ) durch die Merkmalpunkte hindurch in die entsprechende Projektionsrichtung zu konstruieren;
- für die Rekonstruktion nur solche Projektionsaufnahmen auszuwählen, für die sich die Projektionslinien (lᵢ, lⱼ, lₖ) annähernd im selben Raumpunkt (r₀) schneiden.

2. Einrichtung nach Anspruch 1, **dadurch gekennzeichnet, dass** die bildgebende Vorrichtung eine Röntgenvorrichtung (1) mit einer Röntgenstrahlungsquelle (2) und einem Röntgendetektor (5) ist, welche um eine gemeinsame Achse drehbar gelagert sind.

3. Einrichtung nach Anspruch 1, **dadurch gekennzeichnet, dass** sie eine mit der Datenverarbeitungseinrichtung (7) gekoppelte Anzeigeeinrichtung (8) zur Darstellung des rekonstruierten dreidimensionalen Bildes umfasst.

4. Einrichtung nach Anspruch 1, **dadurch gekennzeichnet, dass** das charakteristische Objektmerkmal ein am Objekt befindlicher Marker, insbesondere ein Katheter oder ein Stent, ist.

5. Einrichtung nach Anspruch 1, **dadurch gekennzeichnet, dass** das charakteristische Objektmerkmal ein Verzweigungspunkt (r₀) einer Objektstruktur, insbesondere eines Gefäßes, ist.

6. Einrichtung nach Anspruch 1, wobei die Datenverarbeitungseinrichtung (7) dazu eingerichtet ist,
a) aus einer Anzahl von Projektionsaufnahmen (Pᵢ, Pⱼ, Pₖ, Pₗ) eine erste Projektionsaufnahme (Pᵢ) auszuwählen;
b) zu der genannten ersten Projektionsaufnahme (Pᵢ) eine aus einer anderen Projektionsrichtung aufgenommene zweite Projektionsaufnahme (Pₖ) derart auszuwählen, dass sich die Projektionslinien (lᵢ, lₖ) eines charakteristischen Objektmerkmals für beide Projektionsaufnahmen (Pᵢ, Pₖ) zumindest näherungsweise in einem Raumpunkt (r₀) schneiden;
c) weitere Projektionsaufnahmen (P₁) für die Rekonstruktion des dreidimensionalen Bildes so auszuwählen, dass die zugehörigen Projektionslinien (l₁) des charakteristischen Objektmerkmals näherungsweise durch den genannten Raumpunkt (r₀) verlaufen.

7. Einrichtung nach Anspruch 6, **dadurch gekennzeichnet, dass** die Projektionsrichtung der zweiten Projektionsaufnahme (Pₖ) annähernd in einem Winkel (α) von 90° zur Projektionsrichtung der ersten Projektionsaufnahme (Pᵢ) liegt.

8. Verfahren zur Erzeugung eines dreidimensionalen Bildes eines einer zyklischen Bewegung unterliegenden Objektes (9), umfassend die folgenden Schritte:
a) Erzeugung einer Anzahl von Projektionsaufnahmen (Pᵢ₋₁, Pᵢ, Pᵢ₊₁, Pⱼ, Pₖ, Pₗ) des Objektes (9) aus verschiedenen Richtungen;
b) I) Identifikation eines charakteristischen Objektmerkmalpunktes (Xᵢ, Xⱼ, Xₖ) in den Projektionsaufnahmen (Pᵢ, Pⱼ, Pₖ, Pₗ),
II) Konstruktion von Projektionslinien (lᵢ, lⱼ, lₖ) durch die Merkmalpunkte hindurch in die entsprechende Projektionsrichtung;
III) Auswahl von Projektionsaufnahmen, für die sich die Projektionslinien (lᵢ, lⱼ, lₖ) annähernd im selben Raumpunkt (r₀) schneiden;
c) Rekonstruktion des dreidimensionalen Bildes aus den in Schritt b) ausgewählten Projektionsaufnahmen.

9. Verfahren nach Anspruch 8, **dadurch gekennzeichnet, dass** die Projektionsaufnahmen (Pᵢ₋₁, Pᵢ, Pᵢ₊₁, Pⱼ, Pₖ, Pₗ) durch eine Röntgenprojektion eines Objektes (9) erzeugt werden, wobei die Projektionszentren (Sᵢ, Sⱼ, Sₖ, Sₗ) auf einem Kreisbogen um das Objekt verteilt sind.

10. Verfahren nach Anspruch 8, **dadurch gekennzeichnet, dass** das rekonstruierte dreidimensionale Bild auf einer Anzeigeeinrichtung (8) dargestellt wird.

## Revendications

1. Dispositif pour générer une image tridimensionnelle d'un objet (9) qui est sujet à un mouvement cyclique, comprenant un dispositif d'imagerie (1) pour générer des images de projection (Pᵢ₋₁, Pᵢ, Pᵢ₊₁ , Pⱼ, Pₖ, Pₗ) de l'objet à partir de diverses directions de projection et un dispositif de traitement de données (7) qui y est couplé pour la reconstruction d'une image tridimensionnelle de l'objet à partir desdites images de projection, dans lequel le dispositif de traitement de données (7) est conçu de manière à:
- identifier un point caractéristique de dispositif d'objet (Xᵢ, Xⱼ, Xₖ) dans les images de projection (Pᵢ, Pⱼ, Pₖ, Pₗ),
- construire des lignes de projection Iᵢ, Iⱼ, Iₖ) à travers les points de dispositif vers la direction correspondante de projection;
- sélectionner, à titre de reconstruction, seules ces images de projection pour lesquelles les lignes de projection (Iᵢ, Iⱼ, Iₖ) s'entrecoupent approximativement au même point spatial (r₀).

2. Dispositif selon la revendication 1, **caractérisé en ce que** le dispositif d'imagerie est un dispositif à rayons X (1) avec une source à rayons X (2) et un détecteur à rayons X (5) qui sont montés à rotation autour d'un axe commun.

3. Dispositif selon la revendication 1, **caractérisé en ce qu'**il comprend un dispositif d'affichage (8) qui est couplé au dispositif de traitement de données (7) pour afficher l'image tridimensionnelle reconstruite.

4. Dispositif selon la revendication 1, **caractérisé en ce que** le dispositif caractéristique d'objet est un marqueur sur l'objet, en particulier, un cathéter ou un stent.

5. Dispositif selon la revendication 1, **caractérisé en ce que** le dispositif caractéristique d'objet est un point de branchement (r₀) d'une structure d'objet, en particulier, un récipient.

6. Dispositif selon la revendication 1, dans lequel le dispositif de traitement de données (7) est conçu de manière à:
a) sélectionner une première image de projection (Pᵢ) à partir d'un certain nombre d'images de projection (Pᵢ, Pⱼ, Pₖ, Pₗ),
b) sélectionner, pour ladite première image de projection (Pᵢ), une deuxième image de projection (Pₖ) qui est prélevée sur une autre direction de telle façon que les lignes de projection (Iᵢ, Iₖ) d'un dispositif caractéristique d'objet pour les deux images de projection (Pᵢ, Pₖ) s'entrecoupent au moins approximativement à un point spatial (r₀;
c) sélectionner de nouvelles autres images de proj ection (P₁) pour la reconstruction de l'image tridimensionnelle de telle façon que les lignes de projection associées (I₁) du dispositif caractéristique d'objet s'étendent approximativement à travers ledit point spatial (r₀).

7. Dispositif selon la revendication 6, **caractérisé en ce que** la direction de projection de la deuxième image de projection (Pₖ) se situe approximativement sous un angle (α) égal à 90° par rapport à la direction de projection de la première image de projection (Pᵢ).

8. Procédé pour générer une image tridimensionnelle d'un objet (9) qui est sujet à un mouvement cyclique, comprenant les étapes suivantes consistant à:
a) générer un certain nombre d'images de projection (Pᵢ₋₁, Pᵢ, Pᵢ₊₁, Pⱼ, Pₖ, Pₗ) de l'objet (9) à partir de diverses directions de projection;
b) i) identifier un point caractéristique de dispositif d'objet (Xᵢ, Xⱼ, Xₖ) dans les images de projection (Pᵢ, Pⱼ, Pₖ, Pₗ),
- ii) construire des lignes de projection (Iᵢ, Iⱼ, Iₖ) à travers les points de dispositif vers la direction correspondante de projection;
- iii) sélectionner des images de projection pour lesquelles les lignes de projection (Iᵢ, Iⱼ, Iₖ) s'entrecoupent approximativement au même point spatial (r₀;
c) reconstruire l'image tridimensionnelle à partir des images de projection qui sont sélectionnées à l'étape b).

9. Procédé selon la revendication 8, **caractérisé en ce que** les images de projection (Pᵢ₋₁, Pᵢ, Pᵢ₊₁, Pⱼ, Pₖ, Pₗ) sont générées par projection à rayons X d'un objet (9), dans lequel les centres de projection (Sᵢ, Sⱼ, Sₖ, Sₗ) sont distribués sur un arc de cercle autour de l'objet.

10. Procédé selon la revendication 8, **caractérisé en ce que** l'image tridimensionnelle reconstruite est visualisée sur un dispositif d'affichage (8).
